(19) Europäisches Patentamt / European Patent Office / Office européen des brevets

(11) EP 1 870 949 B1

(12) **FASCICULE DE BREVET EUROPEEN**

(45) Date de publication et mention de la délivrance du brevet:
**13.10.2010 Bulletin 2010/41**

(51) Int Cl.:
***H01M 4/48*** *(2010.01)* ***H01M 4/50*** *(2010.01)*
***H01M 4/52*** *(2010.01)* ***H01M 10/0525*** *(2010.01)*

(21) Numéro de dépôt: **07354033.8**

(22) Date de dépôt: **04.06.2007**

(54) **Accumulateur lithium-ion comprenant TiO2-B comme matériau actif d'électrode négative**

Lithium-Ionen-Akkumulator mit TiO2-B als Aktivmaterial der negativen Elektrode

Lithium-ion battery comprising TiO2-B as active material of the negative electrode

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **20.06.2006 FR 0605467**

(43) Date de publication de la demande:
**26.12.2007 Bulletin 2007/52**

(73) Titulaire: **Commissariat à l'Énergie Atomique et aux Énergies Alternatives**
**75015 Paris (FR)**

(72) Inventeurs:
- **Patoux, Sébastien**
  **38600 Fontaine (FR)**
- **Bourbon, Carole**
  **38590 Saint-Michel de Saint-Geoirs (FR)**
- **Le Cras, Frédéric**
  **38470 Notre Dame de l'Osier (FR)**

(74) Mandataire: **Hecké, Gérard et al**
**Cabinet Hecké**
**10, rue d'Arménie**
**Europole**
**BP 1537**
**38025 Grenoble Cedex 1 (FR)**

(56) Documents cités:
**WO-A2-2006/033069 US-B1- 6 337 158**

- **WEI ET AL: "Evolution of the local structure and electrochemical properties of spinel LiNixMn2-xO4 (0=<x<=0.5)" ELECTROCHIMICA ACTA, ELSEVIER SCIENCE PUBLISHERS, BARKING, GB, vol. 51, no. 16, 10 avril 2006 (2006-04-10), pages 3365-3373, XP005358181 ISSN: 0013-4686**
- **KIM J-H ET AL: "COMPARATIVE STUDY OF LINI0.5MN1.5O4-DELTA AND LINI0.5MN1.5O4 CATHODES HAVING TWO CRYSTALLOGRAPHIC STRUCTURES: FD3M AND P4332" CHEMISTRY OF MATERIALS, AMERICAN CHEMICAL SOCIETY, WASHINGTON, US, vol. 16, 2004, pages 906-914, XP002346119 ISSN: 0897-4756**
- **NUSPL G ET AL: "Lithium intercalation in TiO2 modifications" JOURNAL OF MATERIALS CHEMISTRY, THE ROYAL SOCIETY OF CHEMISTRY, CAMBRIDGE, GB, vol. 7, no. 12, 1997, pages 2529-2536, XP002372757 ISSN: 0959-9428**
- **A. ROBERT ARMSTRONG, GRAHAM ARMSTRONG, JESUS CANALES, PETER G. BRUCE: "TiO2?B nanowires as negative electrodes for rechargeable lithium batteries" JOURNAL OF POWER SOURCES, vol. 146, 26 avril 2005 (2005-04-26), pages 501-506, XP002411027**
- **HUANG S Y ET AL: "Rocking chair lithium battery based on nanocrystalline TiO2 (Anatase)" JOURNAL OF THE ELECTROCHEMICAL SOCIETY, ELECTROCHEMICAL SOCIETY. MANCHESTER, NEW HAMPSHIRE, US, vol. 142, no. 9, 1995, pages L142-L144, XP002372759 ISSN: 0013-4651**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 870 949 B1

## Description

### Domaine technique de l'invention

L'invention concerne un accumulateur Lithium-Ion.

### État de la technique

La technologie Lithium-Ion, introduite sur le marché en 1990, est actuellement largement implantée dans le domaine des applications nomades (téléphonie mobile, ordinateurs portables,...), où elle remplace progressivement les accumulateurs nickel-cadmium (NiCd) et nickel-hydrure métallique (NiMH). Cette évolution s'explique par l'amélioration continue des performances des accumulateurs au lithium, leur conférant ainsi des densités d'énergie massique et volumique nettement supérieures à celles proposées par les filières NiCd et NiMH.

Contrairement à l'électrode négative d'un accumulateur Lithium-Métal, l'électrode négative d'un accumulateur Lithium-Ion (également appelé Li-Ion) ne constitue pas une source de lithium pour l'électrode positive. Ainsi, dans un système Lithium-Ion, l'électrode négative comporte généralement un matériau d'intercalation ou d'insertion du lithium tel que le carbone de forme graphite et le lithium provient du matériau actif de l'électrode positive. Les cations Li+ font, alors, des allers-retours entre les électrodes, respectivement négative et positive, à chaque charge et décharge de l'accumulateur. Ainsi, le lithium ne se trouve jamais sous forme métallique dans un accumulateur Li-Ion.

La technologie Li-Ion actuellement commercialisée est basée sur l'intercalation réversible de lithium issu d'un matériau actif de l'électrode positive dans le graphite qui forme le matériau actif de l'électrode négative. Le matériau actif de l'électrode positive est généralement un oxyde lamellaire de type $LiCoO_2$, $LiNiO_2$ et les oxydes mixtes Li(Ni, Co, Mn, Al)$O_2$ ou bien un composé de structure spinelle de composition proche de $LiMn_2O_4$. Dans un tel système Li-Ion, le contrôle de l'état de charge est rendu possible par le suivi de la tension délivrée.

Ce système Li-Ion, et notamment le système à base d'oxyde lamellaire et de graphite, est désormais à maturité pour les applications nomades. Cependant, il n'est pas adapté aux applications présentant des besoins énergétiques nettement plus importants, telles que le véhicule électrique ou hybride, les applications stationnaires et les énergies renouvelables. En effet, les matériaux actifs et notamment les oxydes lamellaires présentent un coût élevé et ils posent des problèmes de sécurité car les phases lamellaires et le graphite sont relativement instables, respectivement à l'état chargé et à l'état déchargé. En outre, l'utilisation du graphite comme matériau actif d'électrode négative impose une limitation sur la densité de courant, en particulier en fin de charge. En effet, le graphite de l'électrode négative des accumulateurs Li-Ion présente un potentiel de fonctionnement (~100 mV vs. Li+/Li) très proche de celui du dépôt de lithium métal. Ainsi, des dendrites de lithium peuvent se former occasionnellement, ce qui risque de provoquer des courts-circuits et une explosion, d'autant plus que la densité de courant est élevée et que l'on maintient un courant constant en fin de charge. Pour éviter ce problème, des protocoles spécifiques de charge ont été développés pour les accumulateurs commerciaux à base de graphite.

De récents développements de matériaux d'électrode proposent de remplacer le graphite de l'électrode négative par l'oxyde de titane lithié $Li_4Ti_5O_{12}$. La réaction d'insertion/extraction (ou d'insertion/désinsertion) de lithium dans le couple $Li_4Ti_5O_{12}/Li_7Ti_5O_{12}$ est la suivante :

$$Li_4Ti_5^{IV}O_{12} \xleftrightarrow{1{,}55V\ vs.\ Li^+/Li} Li_7Ti_3^{III}Ti_2^{IV}O_{12} + 3Li^+ + 3e^-$$

Cette réaction est biphasée, c'est-à-dire qu'elle présente un potentiel d'insertion/désinsertion par rapport au potentiel d'insertion/désinsertion du couple $Li^+/Li$ constant. Le potentiel d'insertion/désinsertion d'un matériau par rapport au potentiel d'insertion/désinsertion du couple $Li^+/Li$ est également appelé, de manière simplifiée, potentiel d'insertion/désinsertion du lithium ou potentiel de fonctionnement de l'électrode. Comme représenté sur la figure 1, le potentiel d'insertion/désinsertion du lithium du couple $Li_4Ti_5O_{12}/Li_7Ti_5O_{12}$ (Courbe B) est égal à 1,55 Volts par rapport au potentiel d'insertion/désinsertion du couple $Li^+/Li$ (Courbe A), soit 1,55 V vs. Li+/Li. Un tel potentiel permet de s'affranchir du risque de formation de dendrite. De plus, le composé $Li_4Ti_5O_{12}$ permet l'insertion réversible de trois moles d'ions lithium, audit potentiel. $Li_4Ti_5O_{12}$ présente, en plus, une grande stabilité chimique et thermique, il est non toxique et il présente une grande efficacité électrochimique... La chimie du titane permet, par ailleurs, la réalisation de tout un éventail de morphologies (texture, taille...) de $Li_4Ti_5O_{12}$, en particulier de taille nanométrique. Ceci peut permettre une insertion/extraction rapide, donc une utilisation pour des applications de puissance. Ainsi, $Li_4Ti_5O_{12}$ est un matériau apte à remplacer le graphite comme matériau d'électrode négative dans certaines applications.

Des développements sont également en cours pour le matériau actif de l'électrode positive. Ainsi, le phosphate de fer lithié $LiFePO_4$, de structure olivine, est depuis quelques années considéré comme un matériau d'électrode positive

de choix pour certaines nouvelles applications, telles que l'automobile hybride, l'outillage portatif ou les systèmes photovoltaïques. L'extraction du lithium dans $LiFePO_4$ se déroule selon le processus biphasé et réversible suivant :

$$LiFe^{II}PO_4 \xleftrightarrow{3,43V\ vs.\ Li^+/Li} Fe^{III}PO_4 + Li^+ + e^-$$

La capacité spécifique du matériau est de 170 mAh/g à un potentiel d'insertion/désinsertion du lithium de 3,4 V vs. $Li^+/Li$ (courbe C sur figure 1). La densité d'énergie massique théorique de $LiFePO_4$, qui correspond à la valeur de la capacité spécifique multipliée par la valeur du potentiel d'insertion/désinsertion du lithium du couple $LiFePO_4/FePO_4$ (soit 3,43 V vs. $Li^+/Li$), est de l'ordre de 580 Wh/kg et elle est donc supérieure à la valeur pratique obtenue avec $LiCoO_2$ et les autres oxydes lamellaires commerciaux (typiquement 530 Wh/kg). Ainsi, ce composé peut être considéré comme une alternative crédible à $LiCoO_2$ et ses dérivés sur le marché des accumulateurs Li-Ion. De plus, il est possible d'atteindre pratiquement les performances théoriques, notamment en procédant à un enrobage particulier des particules de $LiFePO_4$, qui est relativement mauvais conducteur électronique, par du carbone de manière à obtenir un matériau composite $LiFePO_4/C$. Ainsi, l'utilisation dans un accumulateur au lithium de $LiFePO_4$ s'avère fortement intéressante non seulement grâce aux performances intrinsèques du matériau $LiFePO_4$ mais également grâce à sa grande stabilité thermique et chimique, sa faible toxicité et son coût modéré par rapport à celui des composés au cobalt ou au nickel par exemple.

A un stade moins avancé, les oxydes spinelles de haute tension et de grande énergie de type $LiNi_{0,5}Mn_{1,5}O_4$ sont également à l'étude dans l'optique d'un remplacement futur des oxydes lamellaires commerciaux. Le composé $LiNi^{II}{}_{0,5}Mn^{IV}{}_{1,5}O_4$, de structure spinelle est électrochimiquement actif de manière réversible à un potentiel d'environ 4,7 V vs. $Li^+/Li$ (courbe D, figure 1). La réaction de charge/décharge (extraction/insertion de lithium) du couple $LiNi_{0,5}Mn_{1,5}O_4/Ni_{0,5}Mn_{1,5}O_4$ se déroule selon le processus biphasé et réversible suivant:

$$LiNi_{0.5}{}^{II}Mn_{1.5}{}^{IV}O_4 \xleftrightarrow{4,7V\ vs.\ Li^+/Li} Ni_{0.5}{}^{IV}Mn_{1.5}{}^{IV}O_4 + Li^+ + e^-$$

De plus, sa capacité spécifique théorique est de 146,7 mAh/g, lui conférant ainsi une densité d'énergie massique théorique de 692,4 Wh/kg pour un potentiel moyen de 4,72 V vs. $Li^+/Li$.

Le brevet US6337158 propose, pour remplacer $LiCoO_2$ et $LiNiO_2$ comme matériau actif d'une électrode positive, une famille d'oxydes de manganèse contenant du lithium de type $Li_xMn_{2-y-z}Ni_yM_zO_4$ avec z non nul et avantageusement M choisi parmi Fe, Co, Ti et V. De tels oxydes sont comparés à $LiNi_{0,4}Mn_{1,6}O_4$ dans des accumulateurs au lithium comprenant du lithium métallique comme matériau actif d'électrode négative. Par ailleurs, le brevet US6337158 mentionne également, parmi de nombreux exemples, un oxyde métallique tel que $TiO_2$ comme matériau pour l'électrode négative.

Compte tenu des propriétés avantageuses de $LiFePO_4$ et de $Li_4Ti_5O_{12}$, l'association d'une électrode positive à base de $LiFePO_4$ et d'une électrode négative à base de $Li_4Ti_5O_{12}$ a, par exemple, été reportée dans l'article « Optimized Lithium Iron Phosphate for High-Rate Electrochemical Applications » (Journal of The Electrochemical Society, 151(7) A1024-A1027 (2004)) de S. Franger et al.. Ce type d'accumulateur Li-Ion est, en effet, très intéressant puisqu'il utilise des matériaux non toxiques, de grande robustesse, avec notamment une durée de vie prolongée, stables et pouvant fonctionner à des régimes de courant élevés avec des pertes de capacité modérées par rapport à un cyclage à de faibles densités de courant.

Le couple $LiFePO_4/Li_4Ti_5O_{12}$ suscite donc un fort engouement en raison des performances intrinsèques des deux composées. Cependant, comme représenté sur les figures 1 et 2, $LiFePO_4$ à l'électrode positive et $Li_4Ti_5O_{12}$ à l'électrode négative ont chacun un potentiel d'insertion/désinsersion du lithium constant sur une majeure partie de la plage de fonctionnement en capacité. Leur association engendre donc une tension de fonctionnement constante (1,88V) sur une majeure partie de la plage de fonctionnement en capacité. Sur la figure 2, la courbe tension/capacité spécifique de l'accumulateur Li-Ion comportant une électrode négative à base de $Li_4Ti_5O_{12}$ et une électrode positive à base de $LiFePO_4$, en régime de charge/décharge équivalent à C/5, montre que la capacité de l'accumulateur coïncide parfaitement avec les capacités pratiques obtenues sur les matériaux isolés, testés en configuration Li-Métal (figure 1). La tension de fonctionnement est constante sur une majeure partie de la plage de fonctionnement en capacité (entre environ 10% et 90% de la capacité spécifique). Or, dans l'optique d'une future commercialisation, cette caractéristique constitue un frein important car il est impossible de déterminer l'état de charge (ou de décharge) à un moment donné, par la simple lecture de la tension, comme c'est le cas avec les accumulateurs au lithium actuellement commercialisés. L'utilisateur de l'accumulateur Li-Ion comprenant le couple $LiFePO_4/Li_4Ti_5O_{12}$ ou le système électronique de gestion de charge dudit accumulateur ne peut donc pas estimer l'état de charge et donc savoir s'il faut économiser l'énergie de

l'accumulateur ou le recharger rapidement. Un problème similaire est également susceptible de se produire avec tout autre matériau d'électrode positive présentant un potentiel de fonctionnement constant. C'est notamment le cas pour $LiNi_{0,5}Mn_{1,5}O_4$ et ses dérivés, comme le montre la figure 3.

## Objet de l'invention

L'invention a pour but un accumulateur Lithium-Ion remédiant aux inconvénients de l'art antérieur. Plus particulièrement, l'invention a pour but un accumulateur Lithium-Ion dont l'état de charge est facile à contrôler et qui soit adapté à des applications présentant des besoins énergétiques importants.

Selon l'invention, ce but est atteint par les revendications annexées.

## Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

- la figure 1 représente les courbes de tension en fonction du rapport entre la capacité spécifique et la capacité théorique (régime de charge/décharge équivalent à C/5) d'un accumulateur Lithium/Métal comprenant une électrode positive respectivement à base de Li (Courbe A), de $Li_4Ti_5O_{12}$ (Courbe B), de $LiFePO_4$ (Courbe C) et de $LiNi_{0,5}Mn_{1,5}O_4$ (Courbe D).
- la figure 2 représente une courbe tension/capacité spécifique (régime de charge/décharge équivalent à C/5) d'un accumulateur Li-Ion comportant une électrode négative à base de $Li_4Ti_5O_{12}$ et une électrode positive à base de $LiFePO_4$.
- la figure 3 représente une courbe tension/capacité spécifique (régime de charge/décharge équivalent à C/5) d'un accumulateur Li-Ion comportant une électrode négative à base de $Li_4Ti_5O_{12}$ et une électrode positive à base de $LiNi_{0,5}Mn_{1,5}O_4$.
- la figure 4 représente une courbe tension/capacité spécifique (régime de charge/décharge équivalent à C/5) d'un accumulateur Lithium-Métal comprenant une électrode positive à base de $TiO_2$-B synthétisé selon un mode particulier de réalisation.
- la figure 5 représente la courbe de tension en fonction de l'état de charge, obtenue en cyclage en mode galvanostatique (régime de charge/décharge équivalent à C/5), d'un accumulateur Li-Ion comprenant une électrode positive à base de $LiNi_{0,5}Mn_{1,5}O_4$ et une électrode négative à base de $TiO_2$-B synthétisé selon le premier mode de réalisation.
- la figure 6 représente une courbe tension/capacité spécifique (régime de charge/décharge équivalent à C/5) d'un accumulateur Lithium-Métal comprenant une électrode positive à base de $TiO_2$-B synthétisé selon une variante de réalisation.

## Description de modes particuliers de réalisation

L'état de charge d'un accumulateur Li-Ion comportant :

- un matériau actif d'électrode positive présentant un potentiel d'insertion/désinsertion du lithium constant sur une majeure partie de la page de fonctionnement en capacité et choisi parmi $LiNi_{0,5}Mn_{1,5}O_4$ et ses dérivés
- et de l'oxyde de titane $TiO_2$ de structure de type bronze, également appelé $TiO_2$-B, comme matériau actif d'électrode négative,

peut être facilement contrôlé par simple lecture de la tension de fonctionnement.

En effet, contrairement à un accumulateur au lithium comprenant $Li_4Ti_5O_{12}$ comme matériau d'électrode négative et un matériau actif d'électrode positive présentant un potentiel d'insertion/désinsertion du lithium constant sur une majeur partie de la plage de fonctionnement en capacité (par exemple $LiFePO_4$ ou $LiNi_{0,5}Mn_{1,5}O_4$ et ses dérivés), un accumulateur Li-Ion avec $TiO_2$-B comme matériau actif d'électrode négative présente un potentiel de fonctionnement variant continuellement en fonction de l'état de charge (ou de décharge). Le potentiel de fonctionnement de l'électrode positive étant constant sur une majeur partie de la plage de fonctionnement en capacité, la tension délivrée par l'accumulateur varie également de manière continue en fonction de l'état de charge ou de décharge dudit accumulateur et sa mesure permet de contrôler ledit état.

Par ailleurs, l'oxyde de titane de type bronze présente des performances électrochimiques au moins égales à celles obtenues avec une électrode négative à base de $Li_4Ti_5O_{12}$. En effet, parmi les nombreuses variétés structurales (rutile, anatase, ...) de l'oxyde de titane, la structure de type bronze présente l'avantage de posséder une structure tridimensionnelle ouverte formant des canaux, comme le rapporte l'article « $TiO_2$(B) a new form of titanium dioxide and the potassium octatitanate $K_2Ti_8O_{17}$ » (Material Research Bulletin Vol.15, p1129-1133, 1980) de René Marchand et al ou la demande internationale WO2006/033069, qui mentionne également la possibilité de former une cellule électrochimique avec $TiO_2$-B et $LiFePO_4$ respectivement comme matériaux d'électrodes négative et positive. De tels canaux sont propices à l'insertion et l'extraction du lithium. Ainsi, lors du fonctionnement d'un accumulateur au lithium à base de $TiO_2$-B, la réaction d'insertion de lithium dans $TiO_2$-B conduit à la composition de $Li_xTiO_2$-B dans laquelle au moins 0,6 mole d'ions lithium peut s'insérer puis s'extraire. D'une manière générale, la réaction d'insertion/extraction de lithium dans $TiO_2$-B s'écrit :

$$Li\text{-}A + TiO_2 \leftrightarrow Li_{1-x}A + Li_xTiO_2$$

où Li-A correspond au matériau actif de l'électrode positive.

Le matériau actif de l'électrode positive est un matériau présentant un potentiel d'insertion/désinsertion du lithium constant sur une majeure partie de la plage de fonctionnement en capacité. Ainsi, le matériau actif de l'électrode positive est choisi parmi $LiNi_{0,5}Mn_{1,5}O_4$ et les dérivés de $LiNi_{0,5}Mn_{1,5}O_4$. Parmi les dérivés de $LiNi_{0,5}Mn_{1,5}O_4$, le matériau actif peut, par exemple, répondre à la formule suivante : $Li_{1-a}Ni_{0,5-b}Mn_{1,5-c}O_{4-d}$, avec a, b, c et d compris entre -0,1 et +0,1. Par a, b, c et d compris entre -0,1 et +0,1, on entend que chacun des paramètres a, b, c et d est supérieur ou égal à -0,1 et inférieur ou égal à +0,1. Plus particulièrement, le matériau actif peut être un dérivé de $LiNi_{0,5}Mn_{1,5}O_4$ répondant à la formule générale suivante:

$$LiNi_{0,5-x}Mn_{1,5+x}O_{4-d}, \text{ avec } -0,1 \leq x \leq 0,1 \text{ et } d \leq +0,1.$$

$LiNi_{0,5}Mn_{1,5}O_4$ et ses dérivés présentent, comme $LiFePO_4$, un potentiel d'insertion/désinsertion du lithium constant sur une majeure partie de la plage de fonctionnement en capacité. Les matériaux présentant cette caractéristique sont également appelés des matériaux biphasés. Par contre, $LiNi_{0,5}Mn_{1,5}O_4$ présente l'avantage, par rapport à $LiFePO_4$ d'avoir un potentiel d'insertion/désinsertion du lithium plus élevé. Sur la figure 1, on constate, en effet, que le potentiel d'insertion/désinsertion du lithium de $LiFePO_4$ est constant à une valeur de l'ordre de 3,43V, en charge et en décharge, sur l'intervalle 10-90% du rapport entre la capacité spécifique et la capacité théorique (courbe C) tandis que celui de $LiNi_{0,5}Mn_{1,5}O_4$ est de l'ordre de 4,7V, en charge et en décharge, sur le même intervalle (courbe D). Or, le potentiel élevé de l'oxyde spinelle $LiNi_{0,5}Mn_{1,5}O_4$ lui confère une densité d'énergie élevée et permet de fabriquer des accumulateurs Li-Ion de grande densité d'énergie massique (environ 200-220 Wh/kg pour $LiNi_{0,5}Mn_{1,5}O_4$ contre 140-160 Wh/kg avec $LiFePO_4$) et volumique. De plus, les tensions moyennes de fonctionnement de tels accumulateurs sont d'environ 1,7-1,8 V pour le couple $LiFePO_4/TiO_2$-B et d'environ 3,0-3,1 V pour le couple $LiNi_{0,5}Mn_{1,5}O_4/TiO_2$-B.

La réaction d'insertion/désinsertion du lithium dans $TiO_2$-B s'effectue à un potentiel moyen d'environ 1,6 V vs. $Li^+/Li$ et elle est généralement parfaitement réversible. La capacité spécifique expérimentale correspondante est de l'ordre de 200 mAh/g. Ainsi, pour la valeur théorique x = 1 correspondant à la réaction totale de réduction de $Ti^{4+}$ en $Ti^{3+}$, la capacité spécifique théorique d'un accumulateur à base de $TiO_2$-B est de 335 mAh/g alors que, pour un accumulateur à base de $Li_4Ti_5O_{12}$, elle est de 175 mAh/g.

Le gain de capacité intrinsèque obtenu en remplaçant $Li_4Ti_5O_{12}$ par $TiO_2$-B permet, par exemple, d'utiliser des électrodes plus fines, donc plus performantes en puissance, tout en maintenant une capacité globale de l'accumulateur équivalente. De plus, contrairement à $Li_4Ti_5O_{12}$, la technologie bipolaire décrite dans la demande de brevet WO03/047021, est parfaitement applicable à $TiO_2$-B en raison de son potentiel de fonctionnement supérieur à 1 V vs. $Li^+/Li$.

La synthèse de $TiO_2$-B peut être réalisée par tout type de procédés de synthèse connus. Certains procédés de synthèse permettent, par exemple, de réaliser un $TiO_2$-B sous forme de grains de taille micrométrique ou nanométrique. De plus, les conditions de synthèse peuvent également être choisies selon un type de morphologie de grains prédéterminé. En effet, il peut être avantageux de choisir une morphologie particulière de grains de $TiO_2$-B car les propriétés électrochimiques dudit matériau varient sensiblement avec la morphologie des grains, notamment en terme de capacité spécifique pratique et de variation plus ou moins prononcée du potentiel de fonctionnement, au cours

de la réaction d'insertion/extraction de lithium. Plus particulièrement, il est possible de synthétiser des particules de $TiO_2$-B sans forme particulière ou bien en forme de nanofils ou de nanotubes comme reporté dans l'article « Lithium-Ion Intercalation into TiO2-B nanowires » (Advanced Materials, 2005, 17, N°7, p862-865) de A. Robert Armstrong et al. et dans l'article « Nanotubes with the TiO2-B structure » (Chem. Commun., 2005, p2454-2456) de Graham Armstrong et al..

Préférentiellement, les différentes méthodes de synthèse employées sont choisies pour permettre de réaliser des accumulateurs Li-Ion performants, avec une tension de fonctionnement moyenne d'environ 1,6 V vs. $Li^+/Li$ et variant, de façon plus ou moins prononcée, en fonction de l'état de charge dudit accumulateur. Plus particulièrement, la tension de fonctionnement de l'accumulateur varie de manière croissante par rapport à l'état de charge.

D'une manière pratique, les électrodes positive et négative de l'accumulateur Li-Ion selon l'invention peuvent être fabriquées par tout type de moyens connus. A titre d'exemple, le matériau actif chaque électrode peut être mis sous la forme d'une dispersion intime, en solution aqueuse ou organique, avec un additif conducteur électronique tel que du carbone et un liant destiné à apporter une bonne conduction ionique et une tenue mécanique satisfaisante. Le liant peut être un liant organique, tel que les polyéthers, le polyester, un polymère à base de méthacrylate de méthyle, l'acrylonitrile, le fluorure de vinylidène. Le liant peut également être un composé soluble dans l'eau tel que le caoutchouc naturel ou synthétique. La dispersion, lorsqu'elle est aqueuse, peut également comporter un épaississant, par exemple de type carboxy méthylcellulose, hydroxypropyle, méthylcellulose, et/ou un surfactant et/ou un sel (LiOH par exemple). La dispersion, également appelée « encre », est ensuite déposée sur une feuille métallique, par exemple en aluminium et servant de collecteur de courant. L'additif conducteur électronique peut être du carbone.

Le fait que $TiO_2$-B présente un potentiel de fonctionnement supérieur à 1 V vs $Li^+/Li$ présente l'avantage de limiter et même d'éviter la dégradation de l'électrolyte à l'interface entre $TiO_2$-B et l'électrolyte. Ainsi, le choix de l'électrolyte peut être de tout type connu. Il peut, par exemple, être constitué par un sel comportant au moins le cation $Li^+$. Le sel est, par exemple, choisi parmi $LiClO_4$, $LiAsF_6$, $LiPF_6$, $LiBF_4$, $LiR_FSO_3$, $LiCH_3SO_3$, $LiN(R_FSO_2)_2$, $LiC(R_FSO_2)_3$, LiTFSI, LiBOB, LIBETI. $R_F$ étant choisi parmi un atome de fluor et un groupement perfluoroalkyle comportant entre un et huit atomes de carbone. LiTFSI est l'acronyme de lithium trifluoromethanesulphonylimide, LiBOB celui de lithium bis (oxalato)borate, et LIBETI celui de lithium bis(perfluoroethylsulfonyl)imide. Le sel de l'électrolyte est, de préférence, dissous dans un solvant polaire aprotique tel que le carbonate d'éthylène, le carbonate de propylène, le carbonate de diméthyle, le carbonate d'éthylméthyle... L'électrolyte peut être supporté par un élément séparateur disposé entre les deux électrodes de l'accumulateur, l'élément séparateur étant alors imbibé d'électrolyte. Préférentiellement, l'électrolyte est choisi de manière à présenter une bonne stabilité thermique, une conductivité ionique la plus élevée possible, une moindre toxicité et un moindre coût. Dans tous les cas, l'électrolyte doit être stable aux potentiels de fonctionnement des deux électrodes ou bien il doit développer, au cours du premier cycle de charge/décharge, une couche de passivation relativement stable à l'interface électrode/électrolyte et non isolante d'un point de vue ionique. De même, l'électrolyte doit être stable chimiquement vis-à-vis des matériaux d'électrode avec lesquels il est en contact.

A titre d'exemple comparatif, deux accumulateurs Li-Ion, notés accumulateurs A et B, ont été réalisés et testés. Les accumulateurs A et B comportent chacun une électrode négative à base d'un matériau actif particulier.

Pour l'accumulateur A, le matériau actif de l'électrode négative est $Li_4Ti_5O_{12}$. Il est, par exemple, préparé en mélangeant pendant deux heures, dans un broyeur planétaire, 201,05 grammes de $TiO_2$ de variété anatase (Huntsman) avec 76,11 grammes de $Li_2CO_3$ (Aldrich) en présence d'heptane. Après séchage, le broyat est chauffé à 500°C pendant 15 heures, puis à 680°C pendant 15 heures et enfin à 900°C pendant 5 heures. Il est, ensuite, homogénéisé dans un broyeur planétaire pendant une heure, puis chauffé à nouveau à 900°C pendant 5 heures. Un broyage final de 24 heures est, ensuite, réalisé avant de porter la poudre obtenue, directement à 500°C pendant 15 minutes, dans un tube en quartz scellé sous argon et de la refroidir rapidement à la température ambiante. Le diagramme de diffraction des rayons X réalisé sur ladite poudre permet de confirmer la présence du composé $Li_4Ti_5O_{12}$ pur et bien cristallisé.

Pour l'accumulateur B, le matériau actif de l'électrode négative est un composé $TiO_2$-B synthétisé par hydrolyse du tétratinanate de potassium, comme décrit dans l'article « TiO2(B) a new form of titanium dioxide and the potassium octatitanate K2Ti8O17 » (Material Research Bulletin Vol.15, p1129-1133, 1980) de René Marchand et al. Plus particulièrement, 14,81 grammes de nitrate de potassium ($KNO_3$ ; Merck) sont mélangés, dans un broyeur, avec 23,17 grammes d'oxyde de titane de variété anatase ($TiO_2$-anatase ; Huntsman). Après broyage, le mélange est chauffé à 1000°C pendant 24 heures de manière à obtenir le composé $K_2Ti_4O_9$. Ce composé est ensuite introduit dans une solution aqueuse acidifiée (par exemple $HNO_3$ à 3 mol/L) et l'ensemble est agité mécaniquement pendant 12 heures à température ambiante. La poudre obtenue est, ensuite, lavée plusieurs fois à l'eau déminéralisée, puis chauffée à 400°C pendant 3 heures pour obtenir un oxyde de titane $TiO_2$ de forme structurale de type « Bronze ». La taille des particules de $TiO_2$-B est micrométrique.

Afin de déterminer les performances électrochimiques du $TiO_2$-B ainsi synthétisé, un accumulateur Lithium-Métal de type "pile bouton" est réalisé avec :

- une électrode négative de lithium sous forme d'un disque de 16 mm de diamètre et de 130 $\mu$m d'épaisseur et

déposée sur un disque de nickel servant de collecteur de courant,

- une électrode positive constituée par un disque de 14 mm de diamètre prélevé sur un film composite de 25 µm d'épaisseur comprenant 80 % en masse de composé $TiO_2$-B tel que réalisé ci-dessus, 10 % en masse du noir de carbone et 10 % en masse de l'hexafluorure de polyvinylidène, le disque étant déposé sur un feuillard d'aluminium de 20 micromètres d'épaisseur, servant de collecteur de courant,
- un séparateur imbibé d'un l'électrolyte liquide à base du sel $LiPF_6$ (1mol/L) en solution dans un mélange de carbonate d'éthylène et de carbonate de diméthyle.

Comme représenté sur la figure 4, à 20°C, sous un régime de C/5, ce système délivre une capacité stable d'environ 200 mAh/g, c'est-à-dire 60% de la capacité théorique; soit d'avantage que dans le cas de $Li_4Ti_5O_{12}$ (capacité théorique égale à 175 mAh/g). Par ailleurs, contrairement à la courbe A de la figure 1, le potentiel d'insertion/désinsertion du lithium de $TiO_2$-B n'est pas constant sur une majeure partie de la plage de fonctionnement en capacité spécifique.

Les deux accumulateurs A et B comporte également chacun une électrode positive à base de $LiNi_{0,5}Mn_{1,5}O_4$ et un élément séparateur commercialisé sous le nom de Celgard 2400 et imbibé d'électrolyte liquide.

L'électrolyte liquide est constitué de 1 mol/L de $LiPF_6$ en solution dans un mélange de carbonate de propylène, de carbonate de diméthyle et de carbonate d'éthylène.

De plus, le matériau actif de l'électrode positive, $LiNi_{0,5}Mn_{1,5}O_4$ est préparé en mélangeant intimement 10,176 g de carbonate de nickel, 6,066 g de carbonate de lithium et 29,065 g de carbonate de manganèse, dans des conditions stoechiométriques, avec un excès de 3% molaire en Li. Le mélange intime est réalisé dans un broyeur planétaire de type Retsch comprenant un bol de 250 ml avec 13 à 15 billes de 20 mm de diamètre et de 10,8g chacune, pendant 20 heures, à 500 tr/min, en présence d'hexane (poudre submergée). Le mélange est, ensuite séché pendant une nuit à 55°C avant de subir un traitement thermique, à 600°C pendant 10 heures, puis à 900°C pendant 15 heures. Un refroidissement à température ambiante à la vitesse de 0,1°/min est ensuite réalisé. Une analyse par diffraction des rayons X permet de constater la formation du composé $LiNi_{0,5}Mn_{1,5}O_{4-d}$, avec d proche de 0, le paramètre de maille dudit composé étant de 8,167 Angströms.

Les électrodes des accumulateurs A et B sont chacune réalisées en mélangeant 80 % en masse de matériau actif, 10 % en masse de noir de carbone servant de matériau conducteur électronique, et 10 % en masse d'hexafluorure de polyvinylidène servant de liant. Le mélange est, ensuite, déposé sur un collecteur de courant en aluminium.

Les deux accumulateurs A et B ont été testés à 20°C, à un régime d'une charge et d'une décharge en cinq heure (régime C/5).

L'accumulateur A permet l'échange d'ions lithium à un potentiel fixe de 3,2 V sur la majeure partie de sa plage de fonctionnement en capacité. Ainsi, comme représenté sur la figure 3, il n'est pas possible de suivre l'état de charge de l'accumulateur A, en lisant simplement la tension de fonctionnement de l'accumulateur A, car celui-ci reste sensiblement constant sur une majeure partie de la plage d'état de charge ou de décharge et plus particulièrement entre 10% d'état de charge et 90% d'état de charge.

Au contraire, l'accumulateur B permet l'échange d'ions lithium dans le domaine de potentiel d'environ 1,5V-4V (figure 5). Son état de charge est donc parfaitement contrôlable par simple lecture du potentiel.

Il est possible, en raison d'une capacité spécifique intrinsèquement plus élevée de l'électrode négative à base de $TiO_2$-B par rapport à celle à base de $Li_4Ti_5O_{12}$, d'utiliser une masse d'électrode négative moins importante pour un accumulateur à base du couple $LiNi_{0,5}Mn_{1,5}O_4/TiO_2$-B que celle dans le cas d'un accumulateur à base du couple $LiNi_{0,5}Mn_{1,5}O_4/Li_4Ti_5O_{12}$ de même capacité globale.

Selon une variante de réalisation, l'oxyde de titane $TiO_2$ de forme structurale de type « Bronze » peut être réalisé selon une autre méthode de synthèse que celle utilisée dans le cas de l'accumulateur B. Par exemple, $TiO_2$-B peut être synthétisé par voie hydrothermale comme reporté dans l'article précité « Nanotubes with the TiO2-B » de G. Armstrong et al. Plus particulièrement, 5 g de $TiO_2$ de forme anatase (Huntsman) sont introduits dans 84 mL de soude à 15 mol/L. Le mélange est agité pendant 1 heure, puis placé dans une cellule autoclave en téflon (bombe PARR - 125 mL), laquelle est ensuite mise dans une étuve à 170°C, pendant 68 heures. Ensuite, le mélange est récupéré, lavé deux fois à l'eau distillée et centrifugé. La poudre isolée est alors introduite dans 1 L d'eau distillée contenant 0,05 mol/L d'acide chlorhydrique (agitation pendant 2h). Après décantation, la poudre récupérée est de nouveau lavée 2 fois et centrifugée. Finalement, un oxyde de titane $TiO_2$ de forme structurale de type « Bronze » est obtenu, après séchage sous vide à 80°C pendant 24 heures.

Cette méthode de synthèse permet de réaliser un oxyde de titane de type bronze présentant des spécificités morphologiques différentes de l'oxyde réalisé pour l'accumulateur B. Les particules de $TiO_2$-B se présentent partiellement sous forme de nanofils et partiellement sous forme de particules amorphes agglomérées et de tailles disparates.

Afin de déterminer les performances électrochimiques de $TiO_2$-B, un accumulateur Lithium-Métal de type "pile bouton" est réalisé de la même manière que dans l'accumulateur Lithium-Métal précédemment décrit, l'oxyde de titane de type bronze obtenu par hydrolyse du tétratitanate de potassium étant remplacé par celui obtenu par voie hydrothermale.

Comme représenté sur la figure 6, à 20°C, sous un régime de C/5, cet accumulateur Lithium-Métal délivre également une capacité stable d'environ 200 mAh/g. Par contre, la variation de la tension de fonctionnement en fonction de la capacité spécifique est plus rapide pour l'oxyde de titane de type bronze réalisé par voie hydrothermale que pour celui réalisé par hydrolyse du tétratitanate de potassium.

## Revendications

1. Accumulateur Lithium-Ion **caractérisé en ce qu'**il comporte au moins :

   - un matériau actif d'électrode positive, présentant un potentiel d'insertion/désinsertion du lithium constant sur une majeure partie de la plage de fonctionnement en capacité et choisi parmi $LiNi_{0,5}Mn_{1,5}O_4$ et les dérivés de $LiNi_{0,5}Mn_{1,5}O_4$ de type $Li_{1-a}Ni_{0,5-b}Mn_{1,5-c}O_{4-d}$, avec chacun des paramètres a, b, c et d supérieur ou égal à -0,1 et inférieur ou égal à +0,1
   - et un matériau actif d'électrode négative constitué par l'oxyde de titane $TiO_2$ de structure de type bronze.

2. Accumulateur selon la revendication 1, **caractérisé en ce que** les dérivés de $LiNi_{0,5}Mn_{1,5}O_4$ sont de type $LiNi_{0,5-x}Mn_{1,5+x}O_{4-d}$, avec -0,1 s x ≤ 0,1 et d ≤ +0,1.

3. Accumulateur selon l'une des revendications 1 et 2, **caractérisé en ce qu'**il comporte un séparateur imbibé d'électrolyte liquide à base d'un sel comprenant au moins l'ion $Li^+$ comme cation.

## Claims

1. Lithium-Ion storage battery **characterized in that** it comprises at least:

   - a positive electrode active material presenting a constant lithium insertion/extraction potential over most of the capacity operating range and selected among $LiNi_{0,5}Mn_{1,5}O_4$ and derivatives of $LiNi_{0,5}Mn_{1,5}O_4$ of the $Li_{1-a}Ni_{0,5-b}Mn_{1,5-c}O_{4-d}$ type, with each of the parameters a, b, c and d greater than or equal to -0,1 and lower than or equal to 0,1
   - and a negative electrode active material formed by titanium oxide $TiO_2$ of bronze type structure.

2. Storage battery according to claim 1, **characterized in that** the derivatives of $LiNi_{0,5}Mn_{1,5}O_4$ are of the $LiNi_{0,5-x}Mn_{1,5+x}O_{4-d}$ type, with -0,1 ≤ x ≤ 0,1 and d ≤ +0,1.

3. Storage battery according to one of the claims 1 and 2, **characterized in that** it comprises a separator imbibed with liquid electrolyte comprising a salt with at least the $Li^+$ ion as cation.

## Patentansprüche

1. Lithium-Ionen-Akkumulator, **dadurch gekennzeichnet, dass** er wenigstens aufweist:

   - ein aktives Material der positiven Elektrode mit einem konstanten Einsatz/Entnahmepotential des Lithiums über einen Großteil des Kapazitätsbetriebsbereichs, das aus $LiNi_{0,5}Mn_{1,5}O_4$ und den Derivaten von $LiNi_{0,5}Mn_{1,5}O_4$ vom Typ $Li_{1-a}Ni_{0,5-b}Mn_{1,5}O_{4-d}$ gewählt ist, wobei jeder der Parameter a, b, c und d größer oder gleich - 0,1 und kleiner oder gleich + 0,1 ist,
   - und ein aktives Material der negativen Elektrode, das durch Titanoxid $TiO_2$ mit Bronzestruktur gebildet ist.

2. Akkumulator nach Anspruch 1, **dadurch gekennzeichnet, dass** die Derivate von $LiNi_{0,5}Mn_{1,5}O_4$ vom Typ $LiNi_{0,5}XMn_{1,5+x}O_{4-d}$ mit -0,1 ≤ x ≤ 0,1 und d ≤ + 0,1 sind.

3. Akkumulator nach einem der Ansprüche 1 und 2, **dadurch gekennzeichnet, dass** er einen Separator aufweist, der in einen flüssigen Elektrolyten auf Basis eines Salzes getränkt ist, das wenigstens das Ion $Li^+$ als Kation aufweist.

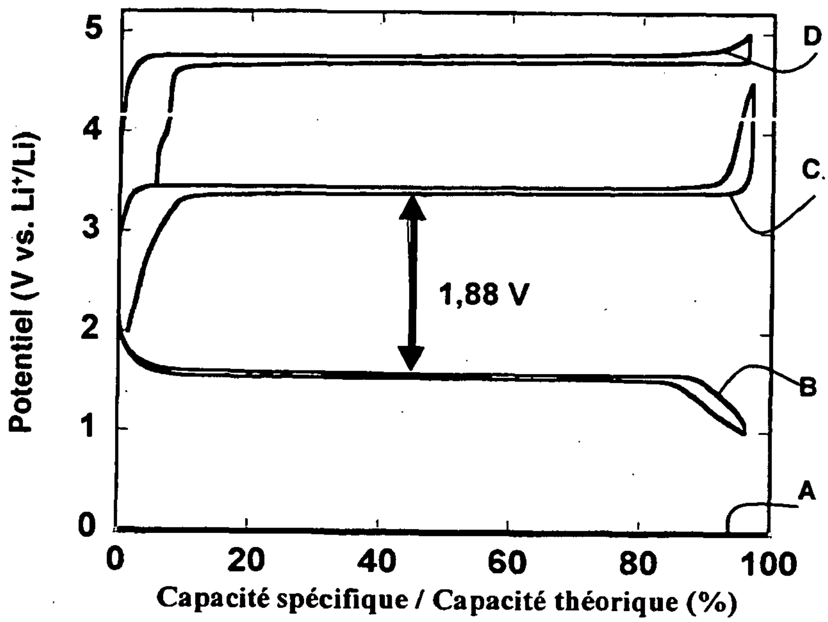


Fig. 1 (Art Antérieur)

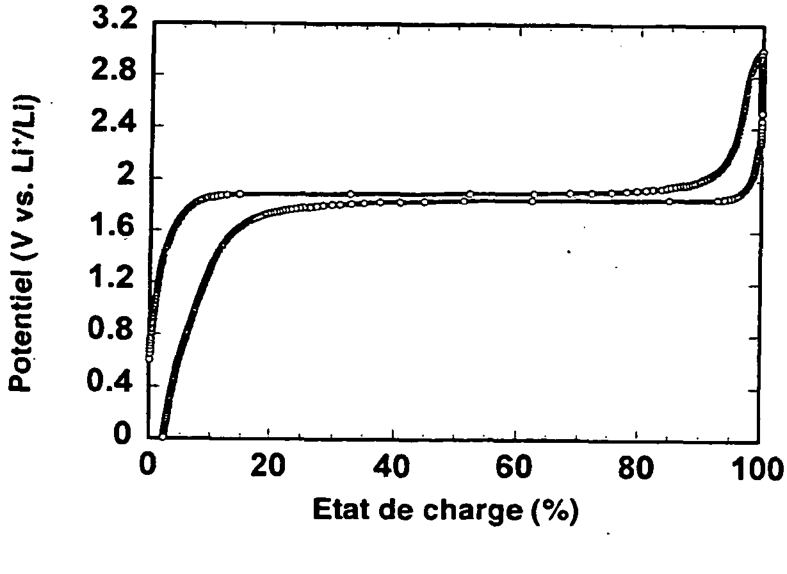


Fig. 2 (Art Antérieur)

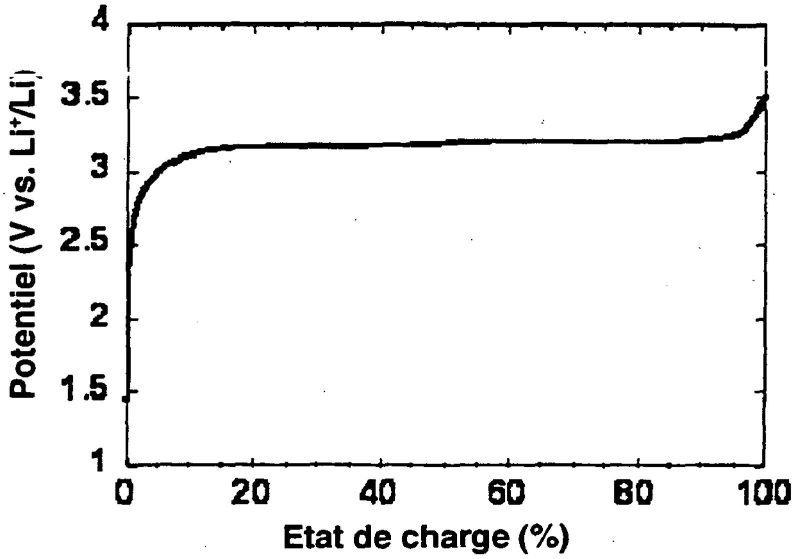
Potentiel (V vs. Li⁺/Li)
4
3.5
3
2.5
2
1.5
1
0
20
40
60
80
100
Etat de charge (%)

Fig. 3

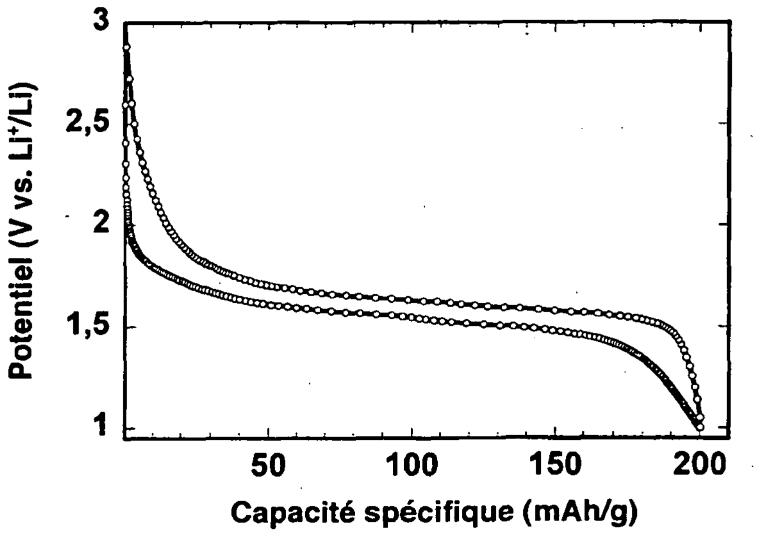
Potentiel (V vs. Li⁺/Li)
3
2,5
2
1,5
1
50
100
150
200
Capacité spécifique (mAh/g)

Fig. 4

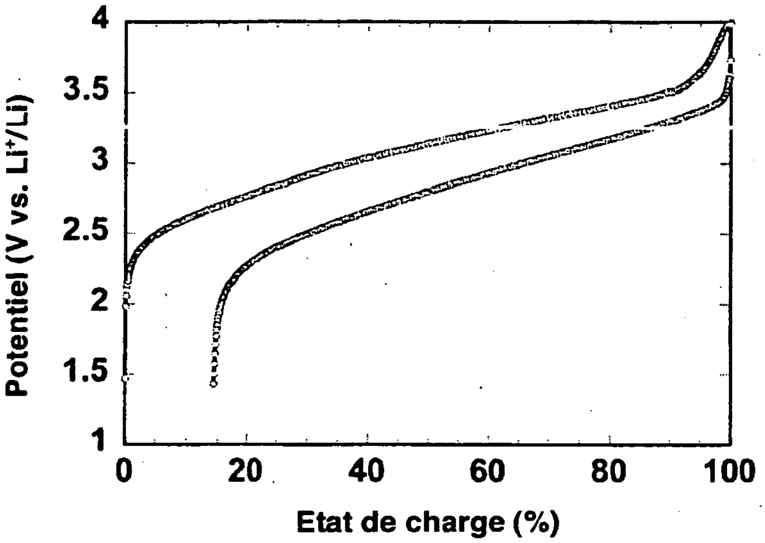
Potentiel (V vs. Li+/Li)
4
3.5
3
2.5
2
1.5
1
0
20
40
60
80
100
Etat de charge (%)

Fig. 5

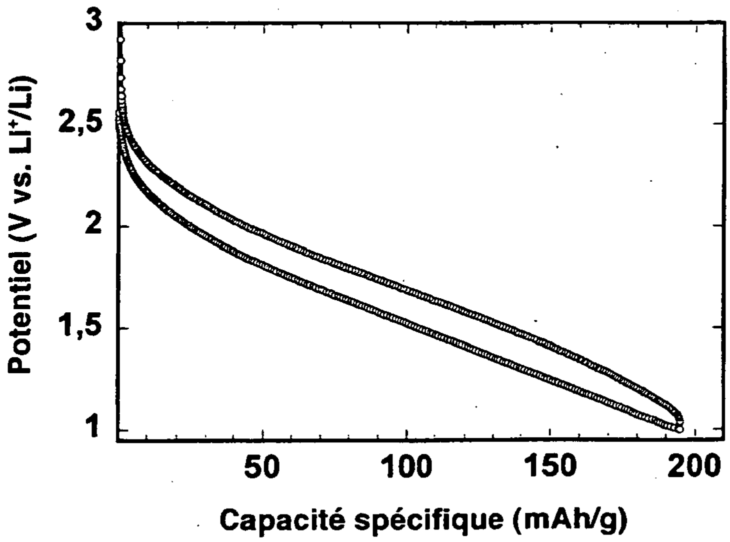
Potentiel (V vs. Li+/Li)
3
2,5
2
1,5
1
50
100
150
200
Capacité spécifique (mAh/g)

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6337158 B
- WO 2006033069 A
- WO 03047021 A


### Littérature non-brevet citée dans la description


- **S. FRANGER.** Optimized Lithium Iron Phosphate for High-Rate Electrochemical Applications. *Journal of The Electrochemical Society,* 2004, vol. 151 (7), A1024-A1027
- **RENÉ MARCHAND.** *Material Research Bulletin,* 1980, vol. 15, 1129-1133
- **A. ROBERT ARMSTRONG.** Lithium-Ion Intercalation into TiO2-B nanowires. *Advanced Materials,* 2005, vol. 17 (7), 862-865
- **GRAHAM ARMSTRONG.** Nanotubes with the TiO2-B structure. *Chem. Commun.,* 2454-2456
- **RENÉ MARCHAND.** TiO2(B) a new form of titanium dioxide and the potassium octatitanate K2Ti8O. *Material Research Bulletin,* 1980, vol. 15, 1129-1133
- **G. ARMSTRONG.** *Nanotubes with the TiO2-B*